# EUROPÄISCHE PATENTSCHRIFT

(11) **EP 3 863 487 B1**
(45) Veröffentlichungstag und Bekanntmachung des Hinweises auf die Patenterteilung: **26.07.2023**
(21) Anmeldenummer: 19779881.2
(22) Anmeldetag: 30.09.2019
(51) Int. Cl.: A47L 15/42

(54) **HAUSHALTSGERÄT UND VERFAHREN ZUM HERSTELLEN EINES HAUSHALTSGERÄTS**
DOMESTIC APPLIANCE AND METHOD FOR PRODUCING A DOMESTIC APPLIANCE
APPAREIL MÉNAGER ET PROCÉDÉ DE FABRICATION D'UN APPAREIL MÉNAGER

(30) Priorität: 12.10.2018 DE 102018217551
(43) Veröffentlichungstag der Anmeldung: 18.08.2021
(73) Patentinhaber: BSH Hausgeräte GmbH, 81739 München (DE)
(72) Erfinder: SING, Alexander, 89426 Wittislingen (DE); FRITZ, Heiko, 89542 Herbrechtingen (DE)
(86) Internationale Anmeldenummer: PCT/EP2019/076404
(87) Internationale Veröffentlichungsnummer: WO 2020/074298

(56) Entgegenhaltungen:
- EP-A1- 3 092 935
- EP-A2- 0 195 923
- DE-A1- 4 110 291
- DE-A1- 4 110 292
- DE-A1- 4 227 957
- DE-A1- 10 118 632
- US-A1- 2011 168 217

## Beschreibung

Die vorliegende Erfindung betrifft ein Haushaltsgerät, insbesondere eine Haushaltsgeschirrspülmaschine, sowie ein Verfahren zum Herstellen eines derartigen Haushaltsgeräts, insbesondere einer derartigen Haushaltsgeschirrspülmaschine.

Eine Haushaltsgeschirrspülmaschine kann Bauteile aufweisen, welche in einem Bereich zwischen einem Spülbehälter der Haushaltsgeschirrspülmaschine und einer Außenverkleidung derselben angebracht sind. Diese Bauteile können beispielsweise Wassertaschen, wasserführende Bauteile, Kunststoffbauteile zur Krafteinleitung in den Spülbehälter, luftführende Kanäle oder Bauteile, elektrische Leitungen oder Komponenten oder dergleichen sein. Um diese Bauteile herum müssen aus fertigungstechnischen Gründen Freiräume vorgesehen werden, um verschiedene Toleranzlagen ausgleichen zu können.

Zur akustischen Isolation eines Spülbehälters einer Haushaltsgeschirrspülmaschine können außenseitig auf den Spülbehälter Bitumenmatten aufgebracht werden. Diese Bitumenmatten können beispielsweise mit Hilfe eines Schmelzklebstoffs außenseitig auf den Spülbehälter aufgeklebt werden. Derartige Bitumenmatten haben jedoch ein hohes Wärmeaufnahmevermögen und leiten die aufgenommene Wärme von dem Spülbehälter weg. Wird der Anteil der mit den Bitumenmatten belegten Fläche des Spülbehälters reduziert, lässt sich die Energieaufnahme der Haushaltsgeschirrspülmaschine reduzieren. Diese Reduktion der mit den Bitumenmatten belegten Fläche hat jedoch zur Folge, dass die Schallemission der Haushaltsgeschirrspülmaschine ansteigt.

Die Druckschrift EP 3 092 935 A1 offenbart eine Anordnung zur thermischen und akustischen Isolation eines Aufnahmebereichs einer Haushaltsgeschirrspülmaschine. Die Anordnung umfasst ein erstes Isolationselement, welches dazu eingerichtet ist, den Aufnahmebereich thermisch zu isolieren, und ein zweites Isolationselement, welche dazu eingerichtet ist, den Aufnahmebereich akustisch zu isolieren. Das erste Isolationselement ist zwischen dem Aufnahmebereich und dem zweiten Isolationselement angeordnet, wobei das erste Isolationselement direkt an den Aufnahmebereich angeschäumt ist.

Dabei können innerhalb des ersten Isolationselements Leitungen eines Wärmetauschers verlegt sein, welche von dem Material des ersten Isolationselements umschäumt sind. Dadurch, dass das erste Isolationselement direkt an den Aufnahmebereich angeschäumt ist, kann auf ein nachträgliches Anbringen der Anordnung an den Aufnahmebereich verzichtet werden. Hierdurch ist eine Kostenreduktion bei der Herstellung eines wasserführenden Haushaltsgeräts mit einer derartigen Anordnung erzielbar. Weiterhin kann hierdurch die Montagekomplexität reduziert werden, da ein zusätzlicher Arbeitsschritt des Isolierens des Aufnahmebereichs verzichtbar ist.

Die Druckschrift DE 42 27 957 A1 offenbart ein Haushaltgerät, insbesondere eine geräusch- und/oder wärmeisolierte Geschirrspülmaschine oder Waschmaschine, deren Gehäusewandteil oder Spül- beziehungsweise Laugenbehälter zumindest teilweise mit Isoliermatten aus Bitumen, Kunststoff, Mineralfasern oder dergleichen belegt sind. Die Isoliermatten sind jeweils mit dem Spülbehälter oder dergleichen über einen ein- oder mehrschichtig ausgebildeten Zwischenträger verbunden, welcher in sich aufspaltbar beziehungsweise von dem Spülbehälter, den Gehäusewandteilen oder der Isoliermatte abziehbar ist. Der Zwischenträger kann mit dem Spülbehälter oder dergleichen und/oder mit der Isoliermatte verklebt sein beziehungsweise die Klebeverbindungen können selbst als Zwischenträger ausgebildet sein. Weiterhin kann als Klebeverbindung ein Schmelzkleber oder vorzugsweise ein abziehbarer Haftkleber verwendet sein. Ferner kann der ein- oder mehrlagige Zwischenträger aus Papier und/oder aus einer aufgetragenen Folie aus Kunststoff bestehen.

Die Druckschrift DE 101 18 632 A1 offenbart einen geräusch- und wärmeisolierten Spülbehälter für eine Geschirrspülmaschine mit einer den Spülbehälter verschließenden Gerätetür, wobei die Isolierung ein- oder mehrschichtig auf die Behälteraußenseiten haftend aufgebracht ist. Die die Außenseiten von dem Spülbehälter und gegebenenfalls der Gerätetür sind mit einer nichtschäumenden Isoliermasse auf Polyurethanbasis belegt. Die Beschichtung des Spülbehälters kann an vorbestimmten Mantelteilflächen des Spülbehälters zur Aufnahme der Spülwasserrohre oder dergleichen unterbrochen beziehungsweise fortgelassen sein. Weiterhin kann auf die nichtschäumende Isoliermasse eine Isolierschicht aus einem schäumenden PU-Werkstoff aufgebracht sein.

Vor diesem Hintergrund besteht eine Aufgabe der vorliegenden Erfindung darin, ein verbessertes Haushaltsgerät, insbesondere eine verbesserte Haushaltsgeschirrspülmaschine, zur Verfügung zu stellen.

Demgemäß wird ein Haushaltsgerät, insbesondere eine Haushaltsgeschirrspülmaschine, mit einem Funktionsbehälter, insbesondere Spülbehälter, einer außenseitig an dem Funktionsbehälter, insbesondere Spülbehälter, vorgesehenen Isolationsanordnung zur thermischen und/oder akustischen Isolation des Funktionsbehälters, insbesondere Spülbehälters, und einem außerhalb des Funktionsbehälters, insbesondere Spülbehälters, angeordneten Bauteil vorgeschlagen. Dabei weist die Isolationsanordnung zur thermischen und/oder akustischen Isolation des Funktionsbehälters, insbesondere Spülbehälters, ein Isolationselement zur thermischen und/oder akustischen Isolation des Funktionsbehälters, insbesondere Spülbehälters, auf, wobei das Isolationselement zur thermischen und/oder akustischen Isolation des Funktionsbehälters, insbesondere Spülbehälters, materialeinstückig aus einem Kunststoffmaterial gefertigt ist, wobei das Bauteil von dem Kunststoffmaterial zumindest teilweise umschäumt ist und wobei das Kunststoffmaterial in einem ausgehärteten und/oder vernetzten Zustand vorzugsweise adhäsive Eigenschaften aufweist, so dass das Isolationselement zur thermischen und/oder akustischen Isolation des Funktionsbehälters, insbesondere Spülbehälters, mit einer dem Spülbehälter zugewandten Oberfläche an dem Funktionsbehälter, insbesondere Spülbehälter, anhaftet. Das mit der dem Funktionsbehälter, insbesondere Spülbehälter, zugewandten Oberfläche an dem Funktionsbehälter, insbesondere Spülbehälter, anhaftende Isolationselement zur thermischen und/oder akustischen Isolation des Funktionsbehälters, insbesondere Spülbehälters, ist zerstörungsfrei von dem Funktionsbehälter, insbesondere Spülbehälter, trennbar.

Dadurch, dass das Bauteil von dem Kunststoffmaterial zumindest teilweise umschäumt ist, können in das Isolationselement zur thermischen und/oder akustischen Isolation des Funktionsbehälters, insbesondere Spülbehälters, beziehungsweise in die Isolationsanordnung zur thermischen und/oder akustischen Isolation des Funktionsbehälters, insbesondere Spülbehälters, zusätzliche Funktionen integriert werden. Es ist somit eine vollständige Nutzung des Bauraums der Isolationsanordnung zur thermischen und/oder akustischen Isolation des Funktionsbehälters, insbesondere Spülbehälters, ohne das Vorsehen von Toleranzen möglich. Ferner können Bauteilkollisionen vermieden werden. Für den Fall, dass das Bauteil ein aktives Bauteil, wie beispielsweise ein Motor oder ein Lüfter, ist, kann eine bessere akustische Dämmung des Bauteils erzielt werden. Dadurch, dass das Isolationselement zur thermischen und/oder akustischen Isolation des Funktionsbehälters, insbesondere Spülbehälters, nur aufgrund seiner vorzugsweisen adhäsiven Eigenschaften an dem Funktionsbehälter, insbesondere Spülbehälter, haftet, kann dieses nach Beendigung der Lebensdauer des Haushaltsgeräts, insbesondere der Haushaltsgeschirrspülmaschine, einfach von dem Funktionsbehälter, insbesondere Spülbehälter, wieder entfernt und die Bauteile des Haushaltsgeräts, insbesondere der Haushaltsgeschirrspülmaschine, können einzeln und ohne Verunreinigungen wieder einem Wertstoffkreislauf zugeführt werden.

Vorzugsweise ist das Isolationselement zur thermischen und/oder akustischen Isolation des Funktionsbehälters, insbesondere Spülbehälters, durchgehend aus dem Kunststoffmaterial gefertigt. "Materialeinstückig" heißt hierbei, dass das Isolationselement zur thermischen und/oder akustischen Isolation des Funktionsbehälters, insbesondere Spülbehälters, nur einen Werkstoff aufweist, nämlich das zuvor erwähnte Kunststoffmaterial. Der Funktionsbehälter, insbesondere Spülbehälter, ist insbesondere quaderförmig und umfasst einen Boden, eine Rückwand, eine Decke, zwei einander gegenüberliegende Seitenwände und eine Tür. Die Isolationsanordnung zur thermischen und/oder akustischen Isolation des Funktionsbehälters, insbesondere Spülbehälters, kann dabei jeweils an der Rückwand, der Decke, den Seitenwänden und/oder an der Tür vorgesehen sein. Die Isolationsanordnung zur thermischen und/oder akustischen Isolation des Funktionsbehälters, insbesondere Spülbehälters, kann ferner auch an dem Boden vorgesehen sein. Der Funktionsbehälter, insbesondere Spülbehälter, und die Tür umschließen einen Funktionsraum, insbesondere Spülraum, des Haushaltsgeräts, insbesondere der Haushaltsgeschirrspülmaschine. In dem Funktionsraum, insbesondere Spülraum, kann zu reinigendes Gut, insbesondere Spülgut, aufgenommen sein. Das Isolationselement zur thermischen und/oder akustischen Isolation des Funktionsbehälters, insbesondere Spülbehälters, kann auch als erstes Isolationselement zur thermischen und/oder akustischen Isolation des Funktionsbehälters, insbesondere Spülbehälters, bezeichnet werden. Das Isolationselement zur thermischen und/oder akustischen Isolation des Funktionsbehälters, insbesondere Spülbehälters, ist dazu geeignet, den Funktionsbehälter, insbesondere Spülbehälter, thermisch und/oder akustisch zu isolieren. Das Isolationselement zur thermischen und/oder akustischen Isolation des Funktionsbehälters, insbesondere Spülbehälters, kann daher auch als thermisches und/oder akustisches Isolationselement bezeichnet werden.

"Außenseitig" bedeutet dabei, dem Funktionsraum, insbesondere Spülraum abgewandt. Beispielsweise weisen die Rückwand, der Boden, die Decke, die Seitenwände und/oder die Tür jeweils eine dem Funktionsraum, insbesondere Spülraum, zugewandte Innenseite und eine dem Funktionsraum, insbesondere Spülraum, abgewandte Außenseite auf. An der jeweiligen Außenseite ist die Isolationsanordnung zur thermischen und/oder akustischen Isolation des Funktionsbehälters, insbesondere Spülbehälters, vorgesehen. Darunter, dass das Isolationselement zur thermischen und/oder akustischen Isolation des Funktionsbehälters, insbesondere Spülbehälters, "zerstörungsfrei" von dem Funktionsbehälter, insbesondere Spülbehälter, trennbar ist, ist zu verstehen, dass das Isolationselement zur thermischen und/oder akustischen Isolation des Funktionsbehälters, insbesondere Spülbehälters, von dem Funktionsbehälter, insbesondere Spülbehälter, abgezogen oder entfernt werden kann, ohne dass Rückstände des Isolationselements zur thermischen und/oder akustischen Isolation des Funktionsbehälters, insbesondere Spülbehälters, an dem Funktionsbehälter, insbesondere Spülbehälter, haften bleiben. Es können dabei jedoch auch geringfügige Rückstände an dem Funktionsbehälter, insbesondere Spülbehälter, verbleiben. Das heißt, das Isolationselement zur thermischen und/oder akustischen Isolation des Funktionsbehälters, insbesondere Spülbehälters, lässt sich leicht von dem Funktionsbehälter, insbesondere Spülbehälter, ablösen, es können jedoch Rückstände an dem Funktionsbehälter, insbesondere Spülbehälter, verbleiben. Diese lassen sich durch Reiben entfernen. Insbesondere kann das Isolationselement zur thermischen und/oder akustischen Isolation des Funktionsbehälters, insbesondere Spülbehälters, ohne Hilfsmittel, wie zum Beispiel Lösungsmittel, von dem Funktionsbehälter, insbesondere Spülbehälter, getrennt werden. Die Verbindung zwischen dem Isolationselement zur thermischen und/oder akustischen Isolation des Funktionsbehälters, insbesondere Spülbehälters, und dem Funktionsbehälter, insbesondere Spülbehälter, kann eine schwach haftende Klebeverbindung sein.

Das Kunststoffmaterial kann mehrere Komponenten aufweisen, welche zum Herstellen des Isolationselements zur thermischen und/oder akustischen Isolation des Funktionsbehälters, insbesondere Spülbehälters, vermischt werden und chemisch miteinander derart reagieren, dass das Kunststoffmaterial vollständig aushärtet und/oder vernetzt. Das Kunststoffmaterial selbst weist die vorzugsweisen adhäsiven oder vorzugsweisen klebenden Eigenschaften auf. Unter "Adhäsion" ist vorliegend die Eigenschaft des Kunststoffmaterials zu verstehen, dass die dem Funktionsbehälter, insbesondere Spülbehälter, zugewandte Oberfläche des Isolationselements zur thermischen und/oder akustischen Isolation des Funktionsbehälters, insbesondere Spülbehälters, mit einer Außenseite des Funktionsbehälters, insbesondere Spülbehälters, derart in Wechselwirkung tritt, dass das Isolationselement zur thermischen und/oder akustischen Isolation des Funktionsbehälters, insbesondere Spülbehälters, an dem Funktionsbehälter, insbesondere Spülbehälter, haftet. Die Adhäsion kann dabei auf molekularen Wechselwirkungen zwischen dem Kunststoffmaterial und dem Material des Funktionsbehälters, insbesondere Spülbehälters, beruhen. Weiterhin kann die Adhäsion auch auf physikalisch-mechanischen Kräften beruhen. Beispielsweise kann sich das Kunststoffmaterial in mikroskopisch kleinen Poren und/oder Vertiefungen des Funktionsbehälters, insbesondere Spülbehälters, verklammern oder verhaken. Insbesondere ist das Isolationselement zur thermischen und/oder akustischen Isolation des Funktionsbehälters, insbesondere Spülbehälters, klebstofffrei mit dem Funktionsbehälter, insbesondere Spülbehälter, verbunden. Wie zuvor ausgeführt, umfasst das Kunststoffmaterial des Isolationselements zur thermischen und/oder akustischen Isolation des Funktionsbehälters, insbesondere Spülbehälters, selbst vorzugsweise adhäsive oder vorzugsweise klebende Eigenschaften. Hierdurch kann auf einen Klebstoff zum Verbinden des Isolationselements zur thermischen und/oder akustischen Isolation des Funktionsbehälters, insbesondere Spülbehälters, mit dem Funktionsbehälter, insbesondere Spülbehälter, verzichtet werden. Dies vereinfacht die Herstellung des Haushaltsgeräts, insbesondere der Haushaltsgeschirrspülmaschine, und ermöglicht eine verbesserte Wiederverwertung der verwendeten Materialien.

Darunter, dass das Bauteil von dem Kunststoffmaterial "umschäumt" ist, ist insbesondere zu verstehen, dass das Kunststoffmaterial in flüssiger Form auf oder um das Bauteil gegossen wird und dabei aufschäumt. Das Kunststoffmaterial schließt dann das Bauteil vollständig oder zumindest abschnittsweise ein, so dass das Bauteil vollständig oder zumindest teilweise innerhalb des Isolationselements zur thermischen und/oder akustischen Isolation des Funktionsbehälters, insbesondere Spülbehälters, angeordnet ist.

Gemäß einer Ausführungsform ist das Kunststoffmaterial ein Polyurethan, insbesondere ein aufgeschäumtes Polyurethan.

Das Polyurethan weist vorzugsweise eine offenporige Struktur auf. Das Kunststoffmaterial ist somit kompressibel, so dass bei Kompression Luft aus dem Kunststoffmaterial entweichen kann. Es können auch andere geeignete Kunststoffmaterialien eingesetzt werden. Insbesondere weist das Kunststoffmaterial viskoelastische Eigenschaften auf.

Als "Viskoelastizität" wird ein teilweise elastisches, teilweise viskoses Materialverhalten bezeichnet. Viskoelastische Stoffe vereinigen somit Merkmale von Festkörpern und Flüssigkeiten in sich.

Gemäß einer weiteren Ausführungsform ist das Bauteil ein wasserführendes Bauteil, ein luftführendes Bauteil, eine Wassertasche, ein Kunststoffteil zur Krafteinleitung in den Spülbehälter, ein Lüfter, ein Motor, eine Feder, ein Seil, eine elektrische Leitung oder Komponente, ein Vlies, eine Matte, ein Kunststoffbauteil, ein Schaum oder ein Bitumen.

Insbesondere kann das Bauteil ein aktives oder ein passives Bauteil sein. Ein aktives Bauteil ist beispielsweise ein Lüfter oder ein Motor. Ein passives Bauteil ist ein wie zuvor erwähntes luftführendes Bauteil, eine Wassertasche, ein Kunststoffteil zur Krafteinleitung in den Spülbehälter, eine Feder, ein Seil, eine elektrische Leitung oder Komponente, ein Vlies, eine Matte, ein Kunststoffbauteil, ein Schaum oder ein Bitumen.

Gemäß einer weiteren Ausführungsform umgibt das Kunststoffmaterial das Bauteil vollständig.

Das heißt, das Bauteil ist von allen Seiten mit dem Kunststoffmaterial umgeben oder in dieses eingeschlossen.

Gemäß einer weiteren Ausführungsform weist die Isolationsanordnung zur thermischen und/oder akustischen Isolation des Funktionsbehälters, insbesondere Spülbehälters, ein erstes Isolationselement zur thermischen und/oder akustischen Isolation des Funktionsbehälters, insbesondere Spülbehälters, welches aus dem Kunststoffmaterial gefertigt ist, und ein zweites Isolationselement zur akustischen Isolation des Funktionsbehälters, insbesondere Spülbehälters, auf, wobei das erste Isolationselement zur thermischen und/oder akustischen Isolation des Funktionsbehälters, insbesondere Spülbehälters, zwischen dem Funktionsbehälter, insbesondere Spülbehälter, und dem zweiten Isolationselement zur akustischen Isolation des Funktionsbehälters, insbesondere Spülbehälters, angeordnet ist.

Das zweite Isolationselement zur akustischen Isolation des Funktionsbehälters, insbesondere Spülbehälters, ist optional. Das zweite Isolationselement zur akustischen Isolation des Funktionsbehälters, insbesondere Spülbehälters, kann der akustischen Isolation des Funktionsbehälters, insbesondere Spülbehälters, dienen. Das zweite Isolationselement zur akustischen Isolation des Funktionsbehälters, insbesondere Spülbehälters, kann als akustisches Isolationselement bezeichnet werden. Dadurch, dass das erste Isolationselement zur thermischen und/oder akustischen Isolation des Funktionsbehälters, insbesondere Spülbehälters, zwischen dem Funktionsbehälter, insbesondere Spülbehälter, und dem zweiten Isolationselement zur akustischen Isolation des Funktionsbehälters, insbesondere Spülbehälters, angeordnet ist, kann das zweite Isolationselement zur akustischen Isolation des Funktionsbehälters, insbesondere Spülbehälters, dem Funktionsbehälter, insbesondere Spülbehälter, keine Wärme entziehen. Dies verbessert die Energieeffizienz des Haushaltsgeräts, insbesondere der Haushaltsgeschirrspülmaschine. Das zweite Isolationselement zur akustischen Isolation des Funktionsbehälters, insbesondere Spülbehälters, dient insbesondere als Masseschicht. Das zweite Isolationselement zur akustischen Isolation des Funktionsbehälters, insbesondere Spülbehälters, verbessert die akustischen Eigenschaften der Isolationsanordnung zur thermischen und/oder akustischen Isolation des Funktionsbehälters, insbesondere Spülbehälters,. Beispielsweise kann für den Fall, dass das eingeschäumte Bauteil ein Fixierelement ist, das zweite Isolationselement zur akustischen Isolation des Funktionsbehälters, insbesondere Spülbehälters, mit Hilfe des Bauteils an dem ersten Isolationselement zur thermischen und/oder akustischen Isolation des Funktionsbehälters, insbesondere Spülbehälters, fixiert werden. Bevorzugt ist das zweite Isolationselement zur akustischen Isolation des Funktionsbehälters, insbesondere Spülbehälters, aus einem Bitumenmaterial gefertigt. Insbesondere ist das zweite Isolationselement zur akustischen Isolation des Funktionsbehälters, insbesondere Spülbehälters, aus einem metall- und/oder gesteinsgefüllten Bitumenmaterial gefertigt. Alternativ kann das zweite Isolationselement zur akustischen Isolation des Funktionsbehälters, insbesondere Spülbehälters, auch aus einem metall- und/oder gesteinsgefüllten Kunststoffmaterial gefertigt sein.

Gemäß einer weiteren Ausführungsform kontaktiert das Bauteil das zweite Isolationselement zur akustischen Isolation des Funktionsbehälters, insbesondere Spülbehälters.

Beispielsweise liegt das Bauteil mit einer Oberfläche auf dem zweiten Isolationselement zur akustischen Isolation des Funktionsbehälters, insbesondere Spülbehälters, auf. Diese Oberfläche ist dann nicht mit dem Kunststoffmaterial des ersten Isolationselements zur thermischen und/oder akustischen Isolation des Funktionsbehälters, insbesondere Spülbehälters, bedeckt. Somit ist zumindest eine Fläche des Bauteils nicht mit dem Kunststoffmaterial umschäumt.

Gemäß einer weiteren Ausführungsform ist das Kunststoffmaterial an das zweite Isolationselement zur akustischen Isolation des Funktionsbehälters, insbesondere Spülbehälters, angeschäumt.

Hierdurch kann eine stoffschlüssige Verbindung zwischen dem ersten Isolationselement zur thermischen und/oder akustischen Isolation des Funktionsbehälters, insbesondere Spülbehälters, und dem zweiten Isolationselement zur akustischen Isolation des Funktionsbehälters, insbesondere Spülbehälters, erzielt werden. Insbesondere haftet das erste Isolationselement zur thermischen und/oder akustischen Isolation des Funktionsbehälters, insbesondere Spülbehälters, derart an dem zweiten Isolationselement zur akustischen Isolation des Funktionsbehälters, insbesondere Spülbehälters, dass dieses zerstörungsfrei und rückstandsfrei von diesem trennbar ist. Hierdurch können die Materialien des ersten Isolationselements zur thermischen und/oder akustischen Isolation des Funktionsbehälters, insbesondere Spülbehälters, und des zweiten Isolationselements zur akustischen Isolation des Funktionsbehälters, insbesondere Spülbehälters, getrennt voneinander wiederverwertet werden. Zur Erleichterung der Trennung kann zwischen den Isolationselementen zur thermischen und/oder akustischen Isolation des Funktionsbehälters, insbesondere Spülbehälters, auch eine Trennschicht angeordnet sein. Die Isolationselemente zur thermischen und/oder akustischen Isolation des Funktionsbehälters, insbesondere Spülbehälters, können auch unlösbar miteinander verbunden sein.

Weiterhin wird ein Verfahren zum Herstellen eines derartigen Haushaltsgeräts, insbesondere einer derartigen Haushaltsgeschirrspülmaschine, vorgeschlagen. Das Verfahren umfasst die Schritte: a) Bereitstellen eines Funktionsbehälters, insbesondere Spülbehälters, b) Bereitstellen eines außerhalb des Funktionsbehälters, insbesondere Spülbehälters, angeordneten Bauteils, c) Fertigen einer Isolationsanordnung zur thermischen und/oder akustischen Isolation des Funktionsbehälters, insbesondere Spülbehälters, zur thermischen und/oder akustischen Isolation des Funktionsbehälters, insbesondere Spülbehälters, wobei die Isolationsanordnung zur thermischen und/oder akustischen Isolation des Funktionsbehälters, insbesondere Spülbehälters, ein Isolationselement zur thermischen und/oder akustischen Isolation des Funktionsbehälters, insbesondere Spülbehälters, aufweist, wobei das Isolationselement zur thermischen und/oder akustischen Isolation des Funktionsbehälters, insbesondere Spülbehälters, derart aus einem Kunststoffmaterial gefertigt wird, dass das Kunststoffmaterial das Bauteil zumindest teilweise umschäumt, und wobei das Kunststoffmaterial in einem ausgehärteten und/oder vernetzten Zustand vorzugsweise adhäsive Eigenschaften aufweist, und d) außenseitiges Anbringen der Isolationsanordnung zur thermischen und/oder akustischen Isolation des Funktionsbehälters, insbesondere Spülbehälters, an dem Spülbehälter derart, dass das Isolationselement zur thermischen und/oder akustischen Isolation des Funktionsbehälters, insbesondere Spülbehälters, mit einer dem Funktionsbehälter, insbesondere Spülbehälter, zugewandten Oberfläche an dem Funktionsbehälter, insbesondere Spülbehälter, anhaftet. Das Verfahren zum Herstellen eines derartigen Haushaltsgeräts, insbesondere einer derartigen Haushaltsgeschirrspülmaschine, umfasst einen weiteren Schritt: e) das mit der dem Funktionsbehälter, insbesondere Spülbehälter, zugewandten Oberfläche an dem Funktionsbehälter, insbesondere Spülbehälter, anhaftende Isolationselement zur thermischen und/oder akustischen Isolation des Funktionsbehälters, insbesondere Spülbehälters, ist zerstörungsfrei von dem Funktionsbehälter, insbesondere Spülbehälter, trennbar.

Insbesondere wird bei dem Fertigen der Isolationsanordnung zur thermischen und/oder akustischen Isolation des Funktionsbehälters, insbesondere Spülbehälters, in dem Schritt c) das Isolationselement zur thermischen und/oder akustischen Isolation des Funktionsbehälters, insbesondere Spülbehälters, in einer Form gefertigt. Hierzu wird noch nicht ausgehärtetes und/oder noch nicht vernetztes Kunststoffmaterial in die Form gegossen. Das Kunststoffmaterial schäumt dann in der Form auf und füllt diese aus.

Gemäß einer Ausführungsform wird in dem Schritt c) das Bauteil in eine Form eingelegt, welche mit dem Kunststoffmaterial gefüllt wird, so dass das Bauteil von dem Kunststoffmaterial zumindest teilweise umschäumt wird.

Die Form ist insbesondere eine Gießform oder Gussform. Die Form kann ein Formunterteil und ein Formoberteil aufweisen. Das Bauteil kann während des zumindest teilweise Umschäumens mit dem Kunststoffmaterial beispielsweise mit Hilfe von Drähten oder Stäben in der gewünschten Position gehalten werden. Insbesondere wird in dem Schritt c) das Kunststoffmaterial an das zweite Isolationselement zur akustischen Isolation des Funktionsbehälters, insbesondere Spülbehälters, angeschäumt. Hierzu kann das zweite Isolationselement zur akustischen Isolation des Funktionsbehälters, insbesondere Spülbehälters, in die Form eingelegt werden. In dem Schritt d) kann dann die komplette Isolationsanordnung zur thermischen und/oder akustischen Isolation des Funktionsbehälters, insbesondere Spülbehälters, als Ganzes an dem Funktionsbehälter, insbesondere Spülbehälter, angebracht werden.

Gemäß einer weiteren Ausführungsform wird die Isolationsanordnung zur thermischen und/oder akustischen Isolation des Funktionsbehälters, insbesondere Spülbehälters, in dem Schritt c) derart gefertigt und in dem Schritt d) derart außenseitig an dem Funktionsbehälter, insbesondere Spülbehälter, angebracht, dass die Isolationsanordnung zur thermischen und/oder akustischen Isolation des Funktionsbehälters, insbesondere Spülbehälters, ein erstes Isolationselement zur thermischen und/oder akustischen Isolation des Funktionsbehälters, insbesondere Spülbehälters, welches aus dem Kunststoffmaterial gefertigt wird, und ein zweites Isolationselement zur akustischen Isolation des Funktionsbehälters, insbesondere Spülbehälters, aufweist, wobei das erste Isolationselement zur thermischen und/oder akustischen Isolation des Funktionsbehälters, insbesondere Spülbehälters, zwischen dem Funktionsbehälter, insbesondere Spülbehälter, und dem zweiten Isolationselement zur akustischen Isolation des Funktionsbehälters, insbesondere Spülbehälters, angeordnet wird.

Wie zuvor erwähnt, können beide Isolationselemente zur thermischen und/oder akustischen Isolation des Funktionsbehälters, insbesondere Spülbehälters, gleichzeitig an dem Funktionsbehälter, insbesondere Spülbehälter, angebracht werden. Alternativ können die Isolationselemente zur thermischen und/oder akustischen Isolation des Funktionsbehälters, insbesondere Spülbehälters, auch nacheinander an dem Funktionsbehälter, insbesondere Spülbehälter, angebracht werden. In diesem Fall wird zuerst das erste Isolationselement zur thermischen und/oder akustischen Isolation des Funktionsbehälters, insbesondere Spülbehälters, an dem Funktionsbehälter, insbesondere Spülbehälter, angebracht und anschließend wird das zweite Isolationselement zur akustischen Isolation des Funktionsbehälters, insbesondere Spülbehälters, an dem ersten Isolationselement zur thermischen und/oder akustischen Isolation des Funktionsbehälters, insbesondere Spülbehälters, angebracht.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen, sofern diese unter die vorliegenden Ansprüche fallen. Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigen
- Fig. 1: eine schematische perspektivische Ansicht einer Ausführungsform eines Haushaltsgeräts in Ausgestaltung einer Haushaltsgeschirrspülmaschine;
- Fig. 2A: eine schematische Teilschnittansicht einer Ausführungsform eines Spülbehälters für die Haushaltsgeschirrspülmaschine gemäß Fig. 1 in einer Explosionsdarstellung;
- Fig. 2B: eine schematische Teilschnittansicht einer Ausführungsform eines Spülbehälters für die Haushaltsgeschirrspülmaschine gemäß Fig. 1 in einer Explosionsdarstellung;
- Fig. 3A: eine weitere schematische Teilschnittansicht des Spülbehälters gemäß Fig. 2A;
- Fig. 3B: eine weitere schematische Teilschnittansicht des Spülbehälters gemäß Fig. 2B;
- Fig. 4: eine schematische Schnittansicht einer Form zum Herstellen eines Isolationselements zur thermischen und/oder akustischen Isolation für den Spülbehälter gemäß Fig. 2A oder Fig. 2B;
- Fig. 5: eine weitere schematische Schnittansicht der Form gemäß Fig. 4;
- Fig. 6: eine weitere schematische Schnittansicht der Form gemäß Fig. 4;
- Fig. 7: eine weitere schematische Schnittansicht der Form gemäß Fig. 4;
- Fig. 8: eine schematische Schnittansicht der Haushaltsgeschirrspülmaschine gemäß Fig. 1;
- Fig. 9: eine weitere schematische Schnittansicht der Haushaltsgeschirrspülmaschine gemäß Fig. 1; und
- Fig. 10: ein schematisches Blockdiagramm einer Ausführungsform eines Verfahrens zum Herstellen der Haushaltsgeschirrspülmaschine gemäß Fig. 1.

In den Figuren sind gleiche oder funktionsgleiche Elemente mit denselben Bezugszeichen versehen worden, sofern nichts Anderes angegeben ist.

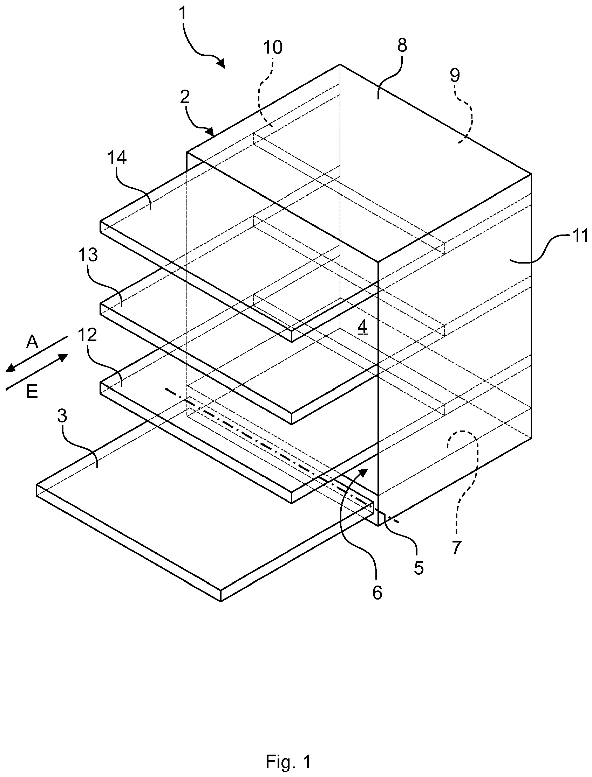

Die Fig. 1 zeigt eine schematische perspektivische Ansicht einer Ausführungsform eines Haushaltsgeräts 1 in Ausgestaltung einer Haushaltsgeschirrspülmaschine. Die Haushaltsgeschirrspülmaschine 1 umfasst einen Funktionsbehälter in Ausgestaltung eines Spülbehälters 2, welcher durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugweise quaderförmig. Der Spülbehälter 2 kann in einem Gehäuse der Haushaltsgeschirrspülmaschine 1 angeordnet sein. Der Spülbehälter 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushaltsgeschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschubrichtung E (Pfeil) in den Spülbehälter 2 hineinschiebbar oder hineinfahrbar und entgegen der Einschubrichtung E (Pfeil) in einer Auszugsrichtung A (Pfeil) aus dem Spülbehälter 2 herausziehbar oder herausfahrbar.

Das erfindungsgemäße Haushaltsgerät 1 kann in allgemeiner Weise eine Haushaltsgeschirrspülmaschine, eine Haushaltswaschmaschine oder ein Haushaltswäschetrockner sein. Je nach Haushaltsgerätetyp kann der Funktionsbehälter ein Spülbehälter, ein Laugenbehälter beziehungsweise eine Wäschetrommel sein. Eine derartige Haushaltswaschmaschine ist beispielsweise aus der Druckschrift EP 2 049 723 A1 bekannt, wohingegen ein derartiger Haushaltswäschetrockner aus der Druckschrift DE 33 45 303 A1 bekannt ist. Der diesbezügliche Inhalt dieser beispielhaft genannten Druckschriften wird hiermit zum Gegenstand der vorliegenden Beschreibung gemacht.

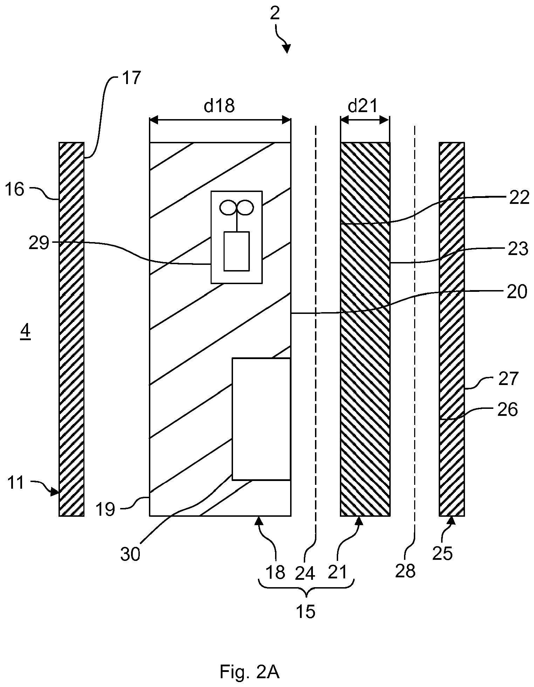

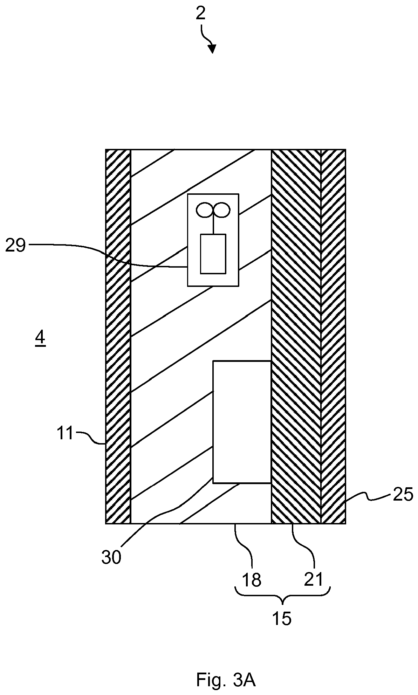

Die Fig. 2A zeigt eine schematische Teilschnittansicht einer Ausführungsform des Spülbehälters 2 in einer Explosionsdarstellung. Die Fig. 3A zeigt eine weitere Teilschnittansicht des Spülbehälters 2. In den Fig. 2A und 3A ist nur die Seitenwand 11 des Spülbehälters gezeigt. Die Haushaltsgeschirrspülmaschine 1 umfasst eine Isolationsanordnung 15 zur thermischen und/oder akustischen Isolation des Spülbehälters 2. Die Isolationsanordnung 15 zur thermischen und/oder akustischen Isolation des Spülbehälters 2 kann an den beiden Seitenwänden 10, 11, der Decke 8, Rückwand 9 und/oder der Tür 3 vorgesehen sein. Die Isolationsanordnung 15 zur thermischen und/oder akustischen Isolation des Spülbehälters 2 kann ferner auch an dem Boden 7 vorgesehen sein. Das heißt, der Spülbehälter 2 kann in der Isolationsanordnung 15 zur thermischen und/oder akustischen Isolation des Spülbehälters 2 aufgenommen sein und diesen zumindest abschnittsweise umschließen oder einschließen. Die Isolationsanordnung 15 zur thermischen und/oder akustischen Isolation des Spülbehälters 2 ist außenseitig an dem Spülbehälter 2 vorgesehen. "Außenseitig" bedeutet hierbei, dem Spülraum 4 abgewandt.

Die Seitenwand 11 umfasst insbesondere eine Innenseite 16, welche dem Spülraum 4 zugewandt ist, und eine Außenseite 17, welche dem Spülraum 4 abgewandt ist. An der Außenseite 17 ist die Isolationsanordnung 15 zur thermischen und/oder akustischen Isolation des Spülbehälters 2 vorgesehen. Die Isolationsanordnung 15 zur thermischen und/oder akustischen Isolation des Spülbehälters 2 umfasst ein erstes Isolationselement 18 zur thermischen und/oder akustischen Isolation des Spülbehälters 2. Das erste Isolationselement 18 zur thermischen und/oder akustischen Isolation des Spülbehälters 2 ist geeignet, den Spülbehälter 2 thermisch und/oder akustisch zu isolieren. Das erste Isolationselement 18 zur thermischen und/oder akustischen Isolation des Spülbehälters 2 kann auch als thermisches und/oder akustisches Isolationselement bezeichnet werden. Das erste Isolationselement 18 zur thermischen und/oder akustischen Isolation des Spülbehälters 2 weist eine erste Oberfläche 19, welche der Außenseite 17 der Seitenwand 11 zugewandt ist, auf. Des Weiteren umfasst das erste Isolationselement 18 zur thermischen und/oder akustischen Isolation des Funktionsbehälters 2, insbesondere Spülbehälters, eine der ersten Oberfläche 19 abgewandte zweite Oberfläche 20. Das erste Isolationselement 18 zur thermischen und/oder akustischen Isolation des Spülbehälters 2 ist vorzugsweise aus einem aufgeschäumten Kunststoffmaterial, insbesondere aus einem aufgeschäumten Polyurethan, gefertigt.

Vorzugsweise weist das erste Isolationselement 18 zur thermischen und/oder akustischen Isolation des Spülbehälters 2 eine offenporige Struktur auf, so dass das erste Isolationselement 18 zur thermischen und/oder akustischen Isolation des Spülbehälters 2 komprimierbar ist. Das Kunststoffmaterial weist die Eigenschaft auf, dass es in einem ausgehärteten und/oder vernetzten Zustand vorzugsweise klebende oder vorzugsweise adhäsive Eigenschaften aufweist. Die vorzugsweisen adhäsiven Eigenschaften sind insbesondere an den Oberflächen 19, 20 des ersten Isolationselements 18 zur thermischen und/oder akustischen Isolation des Spülbehälters 2 vorgesehen. Dabei weist das Kunststoffmaterial selbst die vorzugsweisen adhäsiven Eigenschaften ohne den Zusatz eines Klebstoffs auf.

Dadurch, dass die erste Oberfläche 19 vorzugsweise adhäsive Eigenschaften aufweist, haftet das erste Isolationselement 18 zur thermischen und/oder akustischen Isolation des Spülbehälters 2 mit der dem Spülbehälter 2 zugewandten ersten Oberfläche 19 an dem Spülbehälter 2 beziehungsweise an der Seitenwand 11 an. Die Verbindung zwischen der Seitenwand 11 und dem ersten Isolationselement 18 zur thermischen und/oder akustischen Isolation des Spülbehälters 2 ist dabei klebstofffrei. Das heißt, zwischen der Seitenwand 11 und dem ersten Isolationselement 18 zur thermischen und/oder akustischen Isolation des Spülbehälters 2 ist keine Klebstoffschicht vorgesehen. Hierdurch kann das erste Isolationselement 18 zur thermischen und/oder akustischen Isolation des Spülbehälters 2 zerstörungsfrei sowie rückstandsfrei von der Seitenwand 11 gelöst werden. Bei dem Lösen des ersten Isolationselements 18 zur thermischen und/oder akustischen Isolation des Spülbehälters 2 von der Seitenwand 11 können auch geringfügige Rückstände des ersten Isolationselements 18 zur thermischen und/oder akustischen Isolation des Spülbehälters 2 an der Seitenwand 11 verbleiben. Diese Rückstände können jedoch einfach abgerieben werden.

Das erste Isolationselement 18 zur thermischen und/oder akustischen Isolation des Spülbehälters 2 weist eine Dicke d18 auf. Die Dicke d18 beträgt bevorzugt 5 bis 50 mm, weiter bevorzugt 10 bis 45 mm, weiter bevorzugt 15 bis 40 mm, weiter bevorzugt 20 bis 35 mm, weiter bevorzugt 25 bis 30 mm. Eine Dichte ρ18 des ersten Isolationselements 18 zur thermischen und/oder akustischen Isolation des Spülbehälters 2 beträgt vorzugsweise 5 bis 150 kg/m³, besonders bevorzugt 50 bis 120 kg/m³, weiter bevorzugt 70 bis 100 kg/m³. Eine spezifische Wärmeleitfähigkeit λ18 des ersten Isolationselements 18 zur thermischen und/oder akustischen Isolation des Spülbehälters 2 ist vorzugsweise kleiner als 0,1 W/(m*K), insbesondere kleiner als 0,05 W/(m*K). Das erste Isolationselement 18 zur thermischen und/oder akustischen Isolation des Spülbehälters 2 weist weiterhin vorzugsweise eine spezifische Wärmekapazität c18 von weniger als 2.000 J/(kg*K), bevorzugt von weniger als 1.600 J/(kg*K), weiter bevorzugt von weniger als 1.400 J/(kg*K) auf.

Die Isolationsanordnung 15 zur thermischen und/oder akustischen Isolation des Spülbehälters 2 umfasst neben dem ersten Isolationselement 18 zur thermischen und/oder akustischen Isolation des Spülbehälters 2 ein zweites Isolationselement 21 zur akustischen Isolation des Spülbehälters 2. Das zweite Isolationselement 21 zur akustischen Isolation des Spülbehälters 2 kann auch als akustisches Isolationselement bezeichnet werden. Das zweite Isolationselement 21 zur akustischen Isolation des Spülbehälters 2 dient insbesondere als Masseschicht und verbessert die akustischen Eigenschaften der Isolationsanordnung 15 zur thermischen und/oder akustischen Isolation des Spülbehälters 2. Das zweite Isolationselement 21 zur akustischen Isolation des Spülbehälters 2 ist ebenfalls außenseitig an dem Spülbehälter 2 vorgesehen. Dabei ist das erste Isolationselement 18 zur thermischen und/oder akustischen Isolation des Spülbehälters 2 zwischen dem Spülbehälter 2 und dem zweiten Isolationselement 21 zur akustischen Isolation des Spülbehälters 2 positioniert. Das zweite Isolationselement 21 zur akustischen Isolation des Spülbehälters 2 umfasst eine dem ersten Isolationselement 18 zur thermischen und/oder akustischen Isolation des Spülbehälters 2 zugewandte erste Oberfläche 22 sowie eine der ersten Oberfläche 22 abgewandte zweite Oberfläche 23. Bevorzugt ist das zweite Isolationselement 21 zur akustischen Isolation des Spülbehälters 2 zerstörungsfrei von dem ersten Isolationselement 18 zur thermischen und/oder akustischen Isolation des Spülbehälters 2 trennbar. Das zweite Isolationselement 21 zur akustischen Isolation Spülbehälters 2 kann jedoch auch unlösbar mit dem ersten Isolationselement 18 zur thermischen und/oder akustischen Isolation des Spülbehälters 2 verbunden sein.

Das zweite Isolationselement 21 zur akustischen Isolation des Spülbehälters 2 weist eine Dicke d21 auf. Die Dicke d21 ist kleiner als die Dicke d18 des ersten Isolationselements 18 zur thermischen und/oder akustischen Isolation Spülbehälters 2. Beispielsweise kann die Dicke d21 1 bis 10 mm, bevorzugt 1 bis 8 mm, weiter bevorzugt 1 bis 5 mm, weiter bevorzugt 1 bis 3 mm, betragen. Insbesondere verhindert das erste Isolationselement 18 zur thermischen und/oder akustischen Isolation des Spülbehälters 2 eine Wärmeübertragung von dem Spülbehälter 2 auf das zweite Isolationselement 21 zur akustischen Isolation des Spülbehälters 2. Hierdurch kann das zweite Isolationselement 21 zur akustischen Isolation des Spülbehälters 2 dem Spülbehälter 2 keine Wärme entziehen. Dadurch wird die Energieeffizienz der Haushaltsgeschirrspülmaschine 1 verbessert. In dem zweiten Isolationselement 21 zur akustischen Isolation des Spülbehälters 2 werden Schwingungen des Spülbehälters 2 in Wärme umgewandelt.

Das erste Isolationselement 18 zur thermischen und/oder akustischen Isolation des Spülbehälters 2 ist, wie zuvor schon erwähnt, dazu geeignet, Schwingungen zu dämpfen. Ein Verlustfaktor des Kunststoffmaterials des ersten Isolationselements 18 zur thermischen und/oder akustischen Isolation des Spülbehälters 2 ist hoch und auf den Einsatz in der Haushaltsgeschirrspülmaschine 1 abgestimmt. Unter einem "Verlustfaktor" ist vorliegend bei physikalischen Schwingungen unterschiedlicher Natur das Verhältnis des verlustbehafteten Imaginärteils zum verlustfreien Realteil einer komplexen Größe zu verstehen. Der Verlustfaktor des Kunststoffmaterials des ersten Isolationselements 18 zur thermischen und/oder akustischen Isolation des Spülbehälters 2 ist bei 20 °C insbesondere größer als 0,2, bevorzugt größer als 0,4. Weiterhin ist der Hystereseverlust gemäß der IFD-Methode ("Hysteresis Loss - IFD") nach ASTM D3574 bevorzugt größer 15 %, vorzugsweise größer 20 %, insbesondere größer 30 %, und die Erholzeit ("Recovery Time") nach ASTM D3574 ist bevorzugt größer 2 s, vorzugsweise größer 4, insbesondere größer 5 s. Teilweise werden die Schwingungen auch auf das zweite Isolationselement 21 zur akustischen Isolation des Spülbehälters 2 weitergeleitet. Das zweite Isolationselement 21 zur akustischen Isolation des Spülbehälters 2 stellt in dem Verbund der Isolationsanordnung 15 zur thermischen und/oder akustischen Isolation des Spülbehälters 2 im Wesentlichen eine Flächenmasse durch seine hohe Dichte zur Verfügung.

Das zweite Isolationselement 21 zur akustischen Isolation des Spülbehälters 2 weist vorzugsweise eine deutlich höhere Dichte als das erste Isolationselement 18 zur thermischen und/oder akustischen Isolation des Spülbehälters 2 auf. Das zweite Isolationselement 21 zur akustischen Isolation des Spülbehälters 2 ist vorzugsweise aus einem Bitumenmaterial, insbesondere aus einem metall- und/oder gesteinsgefüllten Bitumenmaterial, oder aus einem Kunststoffmaterial, insbesondere aus einem metall- und/oder gesteinsgefüllten Kunststoffmaterial, gefertigt. Beispielsweise kann das zweite Isolationselement 21 zur akustischen Isolation des Spülbehälters 2 aus einem Butylmaterial gefertigt sein. Das zweite Isolationselement 21 zur akustischen Isolation des Spülbehälters 2 ist insbesondere platten- oder mattenförmig. Das zweite Isolationselement 21 zur akustischen Isolation des Spülbehälters 2 kann auch ein Metallblech, insbesondere ein Stahlblech, sein.

Das zweite Isolationselement 21 zur akustischen Isolation des Spülbehälters 2 dient der Entdröhnung des Spülbehälters 2 beziehungsweise der Dämpfung von Schwingungen des Spülbehälters 2. Das zweite Isolationselement 21 zur akustischen Isolation des Spülbehälters 2 weist vorzugsweise einen möglichst hohen Verlustfaktor auf. Der Verlustfaktor des Materials des zweiten Isolationselements 21 zur akustischen Isolation des Spülbehälters 2 ist bei 20 °C vorzugsweise größer als 0,08, weiter bevorzugt größer als 0,15. Eine Dichte ρ21 des zweiten Isolationselements 21 zur akustischen Isolation des Spülbehälters 2 ist vorzugsweise größer als 1.000 kg/m³.

Die Isolationsanordnung 15 zur thermischen und/oder akustischen Isolation des Spülbehälters 2 kann weiterhin eine optionale Trennschicht 24 umfassen. Die Trennschicht 24 ist zwischen dem ersten Isolationselement 18 zur thermischen und/oder akustischen Isolation des Spülbehälters 2 und dem zweiten Isolationselement 21 zur akustischen Isolation des Spülbehälters 2, insbesondere zwischen den Oberflächen 20, 22, positioniert. Die Trennschicht 24 kann eine Wachsschicht, eine Folie, beispielweise eine Polyethylenfolie, oder dergleichen sein. Die Trennschicht 24 kann auch mehrere Folien umfassen. Die Trennschicht 24 ermöglicht ein zerstörungsfreies und rückstandsfreies Trennen des zweiten Isolationselements 21 zur akustischen Isolation des Spülbehälters 2 von dem ersten Isolationselement 18 zur thermischen und/oder akustischen Isolation des Spülbehälters 2.

Die Haushaltsgeschirrspülmaschine 1 umfasst weiterhin eine Außenverkleidung 25. Die Außenverkleidung 25 ist außenseitig auf der Isolationsanordnung 15 zur thermischen und/oder akustischen Isolation des Spülbehälters 2, insbesondere außenseitig auf dem zweiten Isolationselement 21 zur akustischen Isolation des Spülbehälters 2, angeordnet. Die Außenverkleidung 25 kann beispielsweise ein Stahlblech sein. Die Außenverkleidung 25 kann Teil eines Gehäuses der Haushaltsgeschirrspülmaschine 1 sein. Die Außenverkleidung 25 kann insbesondere auch Teil der Isolationsanordnung 15 zur thermischen und/oder akustischen Isolation des Spülbehälters 2 sein.

Die Außenverkleidung 25 umfasst eine dem zweiten Isolationselement 21 zur akustischen Isolation des Spülbehälters 2 zugewandte erste Oberfläche 26 sowie eine dem zweiten Isolationselement 21 zur akustischen Isolation des Spülbehälters 2 abgewandte zweite Oberfläche 27. Die Außenverkleidung 25 kann entweder lose auf dem zweiten Isolationselement 21 zur akustischen Isolation des Spülbehälters 2 aufliegen oder derart mit diesem verbunden sein, dass die Außenverkleidung 25 rückstandsfrei und zerstörungsfrei von dem zweiten Isolationselement 21 zur akustischen Isolation des Spülbehälters 2 gelöst werden kann. Hierzu kann zwischen dem zweiten Isolationselement 21 zur akustischen Isolation des Spülbehälters 2 und der Außenverkleidung 25 eine Trennschicht 28 vorgesehen sein. Die Trennschicht 28 ist optional. Die Trennschicht 28 kann identisch wie die Trennschicht 24 aufgebaut sein.

Die Haushaltsgeschirrspülmaschine 1 weist ferner neben dem Spülbehälter 2 und der außenseitig an dem Spülbehälter 2 angebrachten Isolationsanordnung 15 zur thermischen und/oder akustischen Isolation des Spülbehälters 2 ein oder mehrere zusätzliche Bauteile 29, 30 auf, welche außerhalb des Spülbehälters 2 und innerhalb der Isolationsanordnung 15 zur thermischen und/oder akustischen Isolation des Spülbehälters 2 angeordnet sind. Die Bauteile 29, 30 sind dabei von dem Kunststoffmaterial, aus dem das erste Isolationselement 18 zur thermischen und/oder akustischen Isolation des Spülbehälters 2 gefertigt ist, umschäumt. Unter "umschäumt" ist vorliegend zu verstehen, dass die Bauteile 29, 30 bei der Herstellung des ersten Isolationselements 18 zur thermischen und/oder akustischen Isolation des Spülbehälters 2 von dem Kunststoffmaterial des ersten Isolationselements 18 zur thermischen und/oder akustischen Isolation des Spülbehälters 2 zumindest teilweise oder vollständig umgeben oder eingeschlossen werden.

Das Kunststoffmaterial ist dabei bevorzugt aus zwei Komponenten gebildet, welche miteinander vermischt werden und chemisch und/oder physikalisch derart miteinander reagieren, dass das Kunststoffmaterial aufschäumt und die Bauteile 29, 30 zumindest abschnittsweise in sich einschließt. Die Bauteile 29, 30 können dabei wasserführende Bauteile, luftführende Bauteile, Wassertaschen, Kunststoffteile zur Krafteinleitung in den Spülbehälter 2, einen Lüfter, einen Motor, eine Feder, ein Seil, elektrische Leitungen oder Komponenten, ein Vlies, eine Matte, ein Kunststoffbauteil, ein Schaum, ein Bitumen oder dergleichen umfassen. In den Fig. 2A und 3A ist das Bauteil 29 als Lüfter dargestellt.

Wie die Fig. 2A und 3A zeigen, umgibt das Kunststoffmaterial des ersten Isolationselements 18 zur thermischen und/oder akustischen Isolation des Spülbehälters 2 das Bauteil 29 vollständig. Das heißt, das Bauteil 29 ist vollständig von dem Kunststoffmaterial des ersten Isolationselements 18 zur thermischen und/oder akustischen Isolation des Spülbehälters 2 eingeschlossen. Alternativ können die Bauteile 29, 30, wie in den Fig. 2A und 3A mit Hilfe des Bauteils 30 gezeigt, an dem zweiten Isolationselement 21 zur akustischen Isolation des Spülbehälters 2 anliegen oder dieses kontaktieren. In diesem Fall ist das Bauteil 30 nicht vollständig von dem Kunststoffmaterial des ersten Isolationselements 18 zur thermischen und/oder akustischen Isolation des Spülbehälters 2 umschlossen. Ferner kann das erste Isolationselement 18 zur thermischen und/oder akustischen Isolation des Spülbehälters 2 auch an das zweite Isolationselement 21 zur akustischen Isolation des Spülbehälters 2 angeschäumt sein.

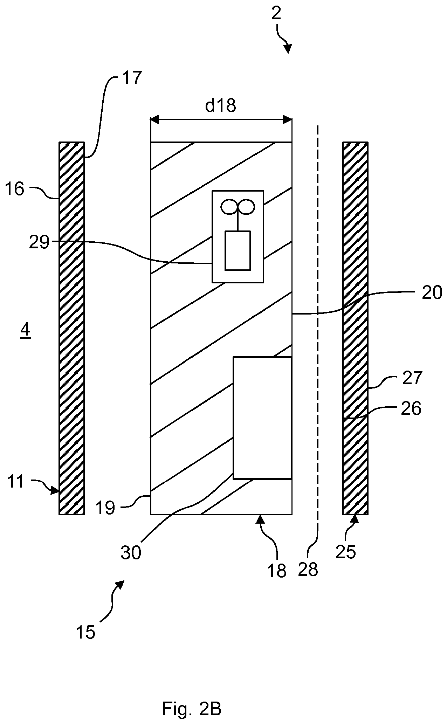

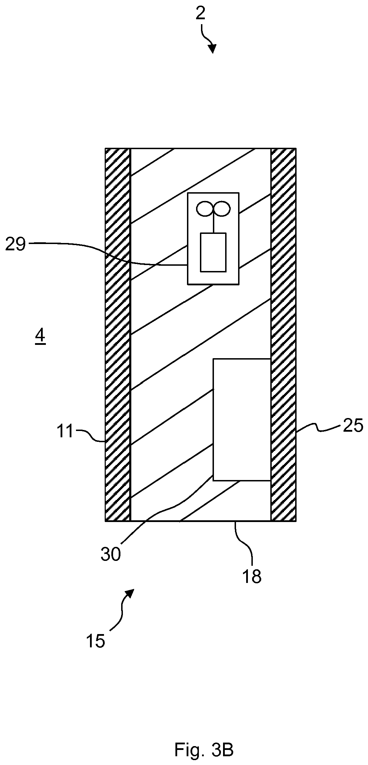

Die Fig. 2B zeigt eine schematische Teilschnittansicht einer weiteren Ausführungsform des Spülbehälters 2 in einer Explosionsdarstellung. Die Fig. 3B zeigt eine weitere Teilschnittansicht des Spülbehälters 2. Der Spülbehälter 2 gemäß den Fig. 2B und 3B unterscheidet sich von dem Spülbehälter 2 gemäß den Fig. 2A und 3A nur dadurch, dass die Isolationsanordnung 15 zur thermischen und/oder akustischen Isolation des Spülbehälters 2 nur das erste Isolationselement 18 zur thermischen und/oder akustischen Isolation des Spülbehälters 2 aufweist. Das zweite Isolationselement 21 zur akustischen Isolation des Spülbehälters 2 ist insbesondere nicht vorgesehen.

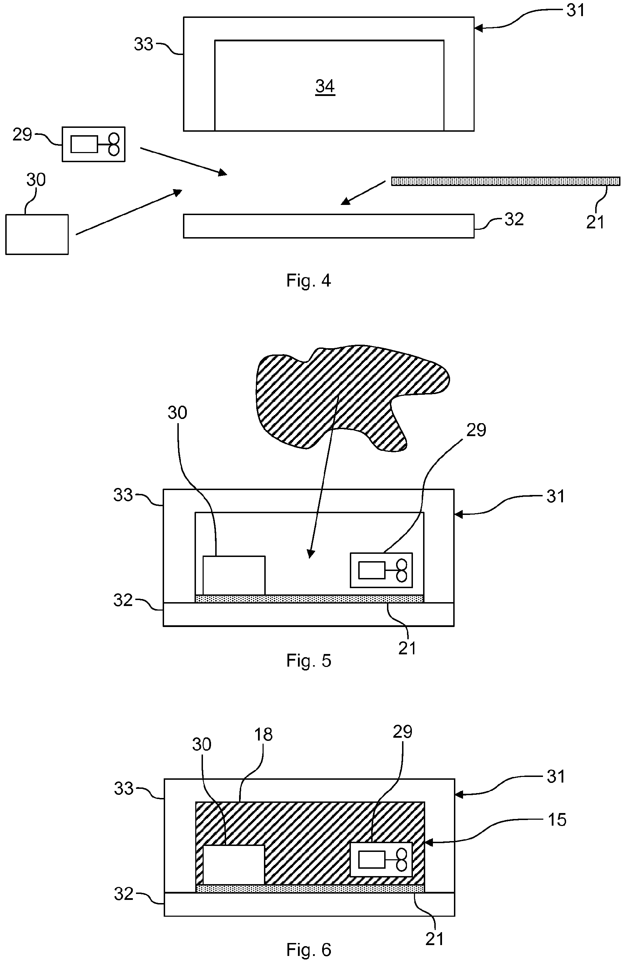

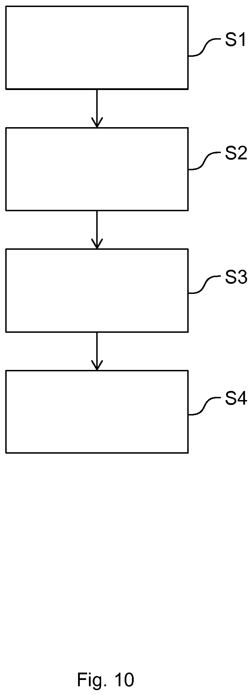

Die Fig. 4 bis 10 zeigen schematisch ein Verfahren zum Herstellen einer wie zuvor erläuterten Haushaltsgeschirrspülmaschine 1. In einem Schritt S1 wird der Spülbehälter 2 bereitgestellt. Vor oder bei dem Bereitstellen des Spülbehälters 2 in dem Schritt S1 wird dieser beispielsweise aus einem Stahlblech gefertigt, welches umgeformt, beispielsweise expandiert, und/oder geprägt wird.

In einem Schritt S2 wird das Bauteil 29, 30 beziehungsweise die Bauteile 29, 30 bereitgestellt. In einem Schritt S3 wird die Isolationsanordnung 15 zur thermischen und/oder akustischen Isolation des Spülbehälters 2 gefertigt. Hierzu wird, wie in den Fig. 4 bis 7 gezeigt, eine Form 31, insbesondere eine Gussform oder Gießform, welche ein Formunterteil 32 und ein Formoberteil 33 aufweist, mit dem Kunststoffmaterial gefüllt. Vor dem Einfüllen des Kunststoffmaterials in die Form 31 werden die Bauteile 29, 30 in die Form 31 eingelegt. Optional kann auch das zweite Isolationselement 21 zur akustischen Isolation des Spülbehälters 2 in die Form 31 eingelegt werden. Die Form 31 umfasst eine Kavität 34, welche ein Negativ einer Geometrie des ersten Isolationselements 18 zur thermischen und/oder akustischen Isolation des Spülbehälters 2 ist. Nach dem Einlegen der Bauteile 29, 30 und/oder des zweiten Isolationselements 21 zur akustischen Isolation des Spülbehälters 2 in die Form 31 wird, wie in der Fig. 5 gezeigt, das flüssige Kunststoffmaterial eingefüllt. Beispielsweise ist das Kunststoffmaterial, wie zuvor erläutert, ein Polyurethanschaum.

Zum Herstellen der Isolationsanordnung 15 zur thermischen und/oder akustischen Isolation des Spülbehälters 2 beziehungsweise des ersten Isolationselements 18 zur thermischen und/oder akustischen Isolation des Spülbehälters 2 werden beispielsweise zwei Komponenten gemischt und in die Form 31 eingefüllt. Das Kunststoffmaterial kann dann unter Umgebungsdruck oder unter Vakuum aufschäumen und die Kavität 34 vollständig ausfüllen. Dabei umgibt dass Kunststoffmaterial die Bauteile 29, 30 entweder vollständig oder, wie im Fall des Bauteils 30, zumindest abschnittsweise. Das Bauteil 29 kann beim Umschäumen desselben mit dem Kunststoffmaterial in der Kavität 34 beispielsweise mit Hilfe von Stäben oder Drähten in Position gehalten werden. Das Bauteil 30 kann auf dem zweiten Isolationselement 21 zur akustischen Isolation des Spülbehälters 2 oder auf dem Formunterteil 32 zur Positionierung abgelegt werden.

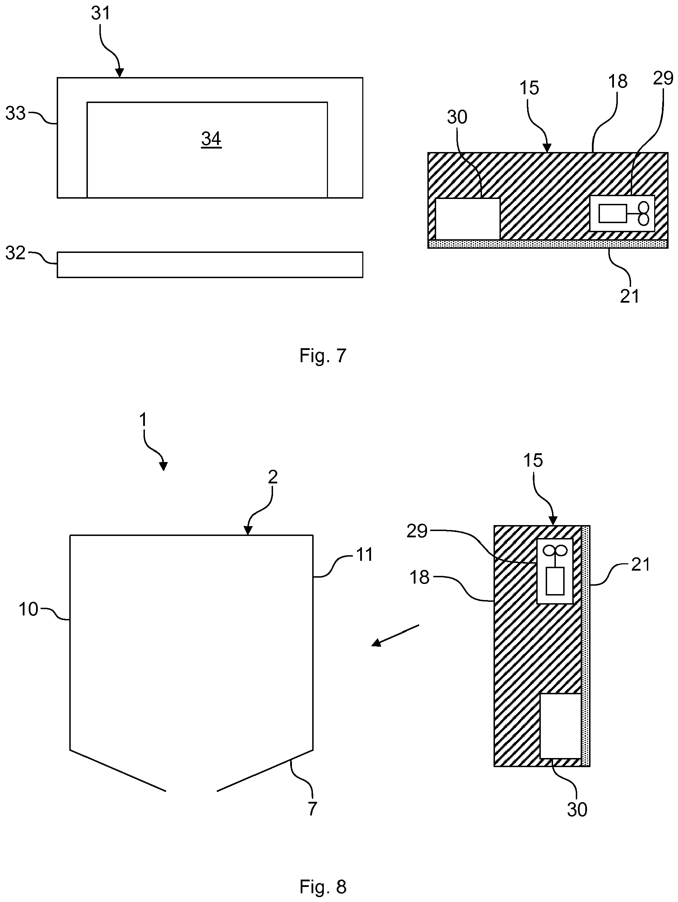

Nach dem vollständigen Aushärten und/oder Vernetzen des Kunststoffmaterials wird die Form 31, wie in der Fig. 7 gezeigt, geöffnet und das erste Isolationselement 18 zur thermischen und/oder akustischen Isolation des Spülbehälters 2 beziehungsweise die Isolationsanordnung 15 zur thermischen und/oder akustischen Isolation des Spülbehälters 2 wird entformt. Dabei sind die Oberflächen 19, 20 des ersten Isolationselements 18 zur thermischen und/oder akustischen Isolation des Spülbehälters 2 auch nach dem vollständigen Aushärten und/oder Vernetzen des Kunststoffmaterials des ersten Isolationselements 18 zur thermischen und/oder akustischen Isolation des Spülbehälters 2 weiter vorzugsweise adhäsiv oder vorzugsweise klebrig. Die Oberflächen 19, 20 können nach dem Entformen beispielsweise mit Hilfe einer Schutzfolie vor Staub und/oder Verunreinigungen geschützt werden.

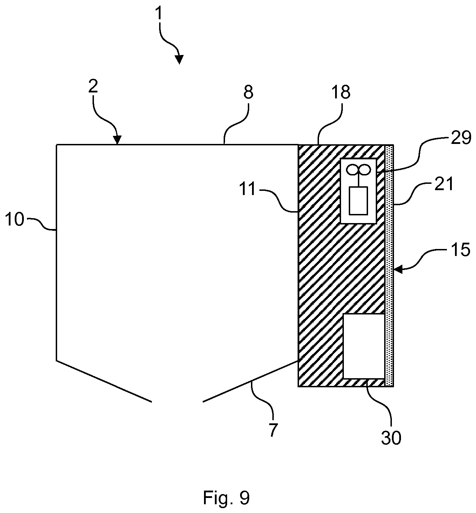

In einem Schritt S4 wird, wie in den Fig. 8 und 9 gezeigt, die Isolationsanordnung 15 zur thermischen und/oder akustischen Isolation des Spülbehälters 2 außenseitig an dem Spülbehälter 2 derart angebracht, dass das Isolationselement 18 zur thermischen und/oder akustischen Isolation des Spülbehälters 2 mit einer dem Spülbehälter 2 zugewandten Oberfläche 19 an dem Spülbehälter 2 anhaftet. Das mit der dem Spülbehälter 2 zugewandten Oberfläche 19 an dem Spülbehälter 2 anhaftende Isolationselement 18 zur thermischen und/oder akustischen Isolation des Spülbehälters 2 ist zerstörungsfrei von dem Spülbehälter 2 trennbar. Hierzu kann erst das erste Isolationselement 18 zur thermischen und/oder akustischen Isolation des Spülbehälters 2 außenseitig an dem Spülbehälter 2 angebracht werden. Danach kann das zweite Isolationselement 21 zur akustischen Isolation des Spülbehälters 2 außenseitig an dem Spülbehälter 2 derart angebracht werden, dass das erste Isolationselement 18 zur thermischen und/oder akustischen Isolation des Spülbehälters 2 zwischen dem Spülbehälter 2 und dem zweiten Isolationselement 21 zur akustischen Isolation des Spülbehälters 2 angeordnet wird. Wie zuvor erwähnt, kann das erste Isolationselement 18 zur thermischen und/oder akustischen Isolation des Spülbehälters 2 auch direkt an das zweite Isolationselement 21 zur akustischen Isolation des Spülbehälters 2 angeschäumt werden. In diesem Fall wird die vormontierte Isolationsanordnung 15 zur thermischen und/oder akustischen Isolation des Spülbehälters 2 in dem Schritt S4 als Ganzes außenseitig an dem Spülbehälter 2 angebracht.

Mit Hilfe des zumindest teilweise Umschäumens der Bauteile 29, 30 mit dem Kunststoffmaterial des ersten Isolationselements 18 zur thermischen und/oder akustischen Isolation des Spülbehälters 2 können in die Isolationsanordnung 15 zur thermischen und/oder akustischen Isolation des Spülbehälters 2 zusätzliche Funktionen integriert werden. Mit Hilfe der eingeschäumten Bauteile 29, 30 kann auch das zweite Isolationselement 21 zur akustischen Isolation des Spülbehälters 2 an dem ersten Isolationselement 18 zur thermischen und/oder akustischen Isolation des Spülbehälters 2 mechanisch fixiert werden. In diesem Fall sind die Bauteile 29, 30 als Haltemittel ausgebildet. Es ist eine vollständige Nutzung des Bauraums des ersten Isolationselements 18 zur thermischen und/oder akustischen Isolation des Spülbehälters 2, ohne Toleranzen vorzusehen, möglich. Es ergibt sich eine bessere akustische Dämmung der Bauteile 29, 30 für den Fall, dass diese als aktives Bauteile, wie Motoren oder Lüfter, ausgebildet sind.

Obwohl die vorliegende Erfindung anhand von Ausführungsbeispielen beschrieben wurde, ist sie vielfältig modifizierbar.

### Verwendete Bezugszeichen

- 1: Haushaltsgerät; Haushaltsgeschirrspülmaschine
- 2: Funktionsbehälter; Spülbehälter
- 3: Tür
- 4: Spülraum
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme; untere Spülgutaufnahme; Unterkorb
- 13: Spülgutaufnahme; obere Spülgutaufnahme; Oberkorb
- 14: Spülgutaufnahme; Besteckschublade
- 15: Isolationsanordnung zur thermischen und/oder akustischen Isolation des Funktionsbehälters, insbesondere Spülbehälters
- 16: Innenseite17 Außenseite
- 18: (Erstes) Isolationselement zur thermischen und/oder akustischen Isolation des Funktionsbehälters, insbesondere Spülbehälters
- 19: Oberfläche
- 20: Oberfläche
- 21: Zweites Isolationselement zur akustischen Isolation des Funktionsbehälters, insbesondere Spülbehälters
- 22: Oberfläche
- 23: Oberfläche
- 24: Trennschicht
- 25: Außenverkleidung
- 26: Oberfläche
- 27: Oberfläche
- 28: Trennschicht
- 29: Bauteil
- 30: Bauteil
- 31: Form
- 32: Formunterteil
- 33: Formoberteil
- 34: Kavität

- A: Auszugsrichtung (Pfeil)
- d18: Dicke
- d21: Dicke
- E: Einschubrichtung (Pfeil)
- S1: Schritt
- S2: Schritt
- S3: Schritt
- S4: Schritt

## Patentansprüche

1. Haushaltsgerät (1), insbesondere Haushaltsgeschirrspülmaschine, mit einem Funktionsbehälter (2), insbesondere Spülbehälter, einer außenseitig an dem Funktionsbehälter (2), insbesondere Spülbehälter, vorgesehenen Isolationsanordnung (15) zur thermischen und/oder akustischen Isolation des Funktionsbehälters (2), insbesondere Spülbehälters, und einem außerhalb des Funktionsbehälters (2), insbesondere Spülbehälters, angeordneten Bauteil (29, 30), wobei die Isolationsanordnung (15) zur thermischen und/oder akustischen Isolation des Funktionsbehälters (2), insbesondere Spülbehälters, ein Isolationselement (18) zur thermischen und/oder akustischen Isolation des Funktionsbehälters (2), insbesondere Spülbehälters, aufweist, wobei das Isolationselement (18) zur thermischen und/oder akustischen Isolation des Funktionsbehälters (2), insbesondere Spülbehälters, materialeinstückig aus einem Kunststoffmaterial gefertigt ist, wobei das Bauteil (29, 30) von dem Kunststoffmaterial zumindest teilweise umschäumt ist und wobei das Kunststoffmaterial in einem ausgehärteten und/oder vernetzten Zustand vorzugsweise adhäsive Eigenschaften aufweist, so dass das Isolationselement (18) zur thermischen und/oder akustischen Isolation des Funktionsbehälters (2), insbesondere Spülbehälters, mit einer dem Funktionsbehälter (2), insbesondere Spülbehälter, zugewandten Oberfläche (19) an dem Funktionsbehälter (2), insbesondere Spülbehälter, anhaftet,
**dadurch gekennzeichnet,**
**dass** das mit der dem Funktionsbehälter (2), insbesondere Spülbehälter, zugewandten Oberfläche (19) an dem Funktionsbehälter (2), insbesondere Spülbehälter, anhaftende Isolationselement (18) zur thermischen und/oder akustischen Isolation des Funktionsbehälters (2), insbesondere Spülbehälters, zerstörungsfrei von dem Funktionsbehälter (2), insbesondere Spülbehälter, trennbar ist.

2. Haushaltsgerät (1) nach Anspruch 1, **dadurch gekennzeichnet, dass** das Kunststoffmaterial ein Polyurethan, insbesondere ein aufgeschäumtes Polyurethan, ist.

3. Haushaltsgerät (1) nach Anspruch 1 oder 2, **dadurch gekennzeichnet, dass** das Bauteil (29, 30) ein wasserführendes Bauteil, ein luftführendes Bauteil, eine Wassertasche, ein Kunststoffteil zur Krafteinleitung in den Spülbehälter, ein Lüfter, ein Motor, eine Feder, ein Seil, eine elektrische Leitung oder Komponente, ein Vlies, eine Matte, ein Kunststoffbauteil, ein Schaum oder ein Bitumen ist.

4. Haushaltsgerät (1) nach Anspruch 1, 2 oder 3, **dadurch gekennzeichnet, dass** das Kunststoffmaterial das Bauteil (29, 30) vollständig umgibt.

5. Haushaltsgerät (1) nach Anspruch 1, 2 oder 3, **dadurch gekennzeichnet, dass** die Isolationsanordnung (15) zur thermischen und/oder akustischen Isolation des Funktionsbehälters (2), insbesondere Spülbehälters, ein erstes Isolationselement (18) zur thermischen und/oder akustischen Isolation des Funktionsbehälters (2), insbesondere Spülbehälters, welches aus dem Kunststoffmaterial gefertigt ist, und ein zweites Isolationselement (21) zur akustischen Isolation des Funktionsbehälters (2), insbesondere Spülbehälters, aufweist, wobei das erste Isolationselement (18) zur thermischen und/oder akustischen Isolation des Funktionsbehälters (2), insbesondere Spülbehälters, zwischen dem Funktionsbehälter (2), insbesondere Spülbehälter, und dem zweiten Isolationselement (21) zur akustischen Isolation des Funktionsbehälters (2), insbesondere Spülbehälters, angeordnet ist.

6. Haushaltsgerät (1) Anspruch 5, **dadurch gekennzeichnet, dass** das Bauteil (29, 30) das zweite Isolationselement (21) zur akustischen Isolation des Funktionsbehälters (2), insbesondere Spülbehälters, kontaktiert.

7. Haushaltsgerät (1) nach Anspruch 5 oder 6, **dadurch gekennzeichnet, dass** das Kunststoffmaterial an das zweite Isolationselement (21) zur akustischen Isolation des Funktionsbehälters (2), insbesondere Spülbehälters, angeschäumt ist.

8. Verfahren zum Herstellen eines Haushaltsgeräts (1), insbesondere einer Haushaltsgeschirrspülmaschine, mit den Schritten:
a) Bereitstellen (S1) eines Funktionsbehälters (2), insbesondere Spülbehälters,
b) Bereitstellen (S2) eines außerhalb des Funktionsbehälters (2), insbesondere Spülbehälters, angeordneten Bauteils (29, 30),
c) Fertigen (S3) einer Isolationsanordnung (15) zur thermischen und/oder akustischen Isolation des Funktionsbehälters (2), insbesondere Spülbehälters, wobei die Isolationsanordnung (15) zur thermischen und/oder akustischen Isolation des Funktionsbehälters (2), insbesondere Spülbehälters, ein Isolationselement (18) zur thermischen und/oder akustischen Isolation des Funktionsbehälters (2), insbesondere Spülbehälters, aufweist, wobei das Isolationselement (18) zur thermischen und/oder akustischen Isolation des Funktionsbehälters (2), insbesondere Spülbehälters, derart aus einem Kunststoffmaterial gefertigt wird, dass das Kunststoffmaterial das Bauteil (29, 30) zumindest teilweise umschäumt, und wobei das Kunststoffmaterial in einem ausgehärteten und/oder vernetzten Zustand vorzugsweise adhäsive Eigenschaften aufweist, und
d) außenseitiges Anbringen (S4) der Isolationsanordnung (15) zur thermischen und/oder akustischen Isolation des Funktionsbehälters (2), insbesondere Spülbehälters, an dem Funktionsbehälter (2), insbesondere Spülbehälter, derart, dass das Isolationselement (18) zur thermischen und/oder akustischen Isolation des Funktionsbehälters (2), insbesondere Spülbehälters, mit einer dem Funktionselement (2), insbesondere Spülbehälter, zugewandten Oberfläche (19) an dem Funktionselement (2), insbesondere Spülbehälter, anhaftet,
**dadurch gekennzeichnet,**
e) **dass** das mit der dem Funktionsbehälter (2), insbesondere Spülbehälter, zugewandten Oberfläche (19) an dem Funktionsbehälter (2), insbesondere Spülbehälter, anhaftende Isolationselement (18) zur thermischen und/oder akustischen Isolation des Funktionsbehälters (2), insbesondere Spülbehälters, zerstörungsfrei von dem Funktionsbehälter (2), insbesondere Spülbehälter, trennbar ist.

9. Verfahren nach Anspruch 8, **dadurch gekennzeichnet, dass** in dem Schritt c) das Bauteil (29, 30) in eine Form (31) eingelegt wird, welche mit dem Kunststoffmaterial gefüllt wird, so dass das Bauteil (29, 30) von dem Kunststoffmaterial zumindest teilweise umschäumt wird.

10. Verfahren nach Anspruch 8 oder 9, **dadurch gekennzeichnet, dass** die Isolationsanordnung (15) zur thermischen und/oder akustischen Isolation des Funktionsbehälters (2), insbesondere Spülbehälters, in dem Schritt c) derart gefertigt wird und in dem Schritt d) derart außenseitig an dem Funktionselement (2), insbesondere Spülbehälter, angebracht wird, dass die Isolationsanordnung (15) zur thermischen und/oder akustischen Isolation des Funktionsbehälters (2), insbesondere Spülbehälters, ein erstes Isolationselement (18) zur thermischen und/oder akustischen Isolation des Funktionsbehälters (2), insbesondere Spülbehälters, welches aus dem Kunststoffmaterial gefertigt wird, und ein zweites Isolationselement (21) zur akustischen Isolation des Funktionsbehälters (2), insbesondere Spülbehälters, aufweist, wobei das erste Isolationselement (18) zur thermischen und/oder akustischen Isolation des Funktionsbehälters (2), insbesondere Spülbehälters, zwischen dem Funktionselement (2), insbesondere Spülbehälter, und dem zweiten Isolationselement (21) zur akustischen Isolation des Funktionsbehälters (2), insbesondere Spülbehälters, angeordnet wird.

## Claims

1. Household appliance (1), in particular a household dishwasher, having a functional compartment (2), in particular a dishwashing compartment, an insulation arrangement (15) provided on the outer side of the functional compartment (2), in particular the dishwashing compartment, for thermal and/or acoustic insulation of the functional compartment (2), in particular the dishwashing compartment, and a component (29, 30) arranged on the outer side of the functional compartment (2), in particular the dishwashing compartment, wherein the insulation arrangement (15) for thermal and/or acoustic insulation of the functional compartment (2), in particular the dishwashing compartment, has an insulation element (18) for thermal and/or acoustic insulation of the functional compartment (2), in particular the dishwashing compartment, wherein the insulation element (18) for thermal and/or acoustic insulation of the functional compartment (2), in particular the dishwashing compartment, is made in one piece from a plastic material, wherein the component (29, 30) is encapsulated at least to some extent in the plastic material and wherein, in a cured and/or cross-linked state, the plastic material has preferably adhesive properties, so that the insulation element (18) for thermal and/or acoustic insulation of the functional compartment (2), in particular the dishwashing compartment, adheres to the functional compartment (2), in particular the dishwashing compartment, by way of a surface (19) which is directed towards the functional compartment (2), in particular the dishwashing compartment,
**characterised in that**
the insulation element (18) for thermal and/or acoustic insulation of the functional compartment (2), in particular the dishwashing compartment, adhering to the functional compartment (2), in particular the dishwashing compartment, can be separated from the functional compartment (2) in a non-destructive manner by way of the surface (19) which is directed towards the functional component (2), in particular the dishwashing compartment.

2. Household appliance (1) according to claim 1, **characterised in that** the plastic material is a polyurethane, in particular a foam polyurethane.

3. Household appliance (1) according to claim 1 or 2, **characterised in that** the component (29, 30) is a water-conducting component, an air-conducting component, a water pocket, a plastic part for introducing a force into the dishwashing compartment, a fan, a motor, a spring, a cable, an electrical lead or component, a fleece, a mat, a plastic component, a foam, or a bitumen.

4. Household appliance (1) according to claim 1, 2 or 3, **characterised in that** the plastic material completely encapsulates the component (29, 30).

5. Household appliance (1) according to claim 1, 2 or 3, **characterised in that** the insulation arrangement (15) for thermal and/or acoustic insulation of the functional compartment (2), in particular the dishwashing compartment, has a first insulation element (18) for thermal and/or acoustic insulation of the functional compartment (2), in particular the dishwashing compartment, which is made of the plastic material, and a second insulation element (21) for acoustic insulation of the functional compartment (2), in particular the dishwashing compartment, wherein the first insulation element (18) for thermal and/or acoustic insulation of the functional compartment (2), in particular the dishwashing compartment, is arranged between the functional compartment (2), in particular the dishwashing compartment, and the second insulation element (21) for acoustic insulation of the functional compartment (2), in particular the dishwashing compartment.

6. Household appliance (1) according to claim 5, **characterised in that** the component (29, 30) is in contact with second insulation element (21) for acoustic insulation of the functional compartment (2), in particular the dishwashing compartment.

7. Household appliance (1) according to claim 5 or 6, **characterised in that** the plastic material is foamed onto the second insulation element (21) for acoustic insulation of the functional compartment (2), in particular the dishwashing compartment.

8. Method for producing a household appliance (1), in particular a household dishwasher, with the steps:
a) Provision (S 1) of a functional compartment (2), in particular a dishwashing compartment,
b) Provision (S2) of a component (29, 30) arranged outside the functional compartment (2), in particular the dishwashing compartment,
c) Production (S3) of an insulation arrangement (15) for thermal and/or acoustic insulation of the functional compartment (2), in particular the dishwashing compartment, wherein the insulation arrangement (15) for thermal and/or acoustic insulation of the functional compartment (2), in particular the dishwashing compartment, has an insulation element (18) for thermal and/or acoustic insulation of the functional compartment (2), in particular the dishwashing compartment, wherein the insulation element (18) for thermal and/or acoustic insulation of the functional compartment (2), in particular the dishwashing compartment, is made of a plastic material in such a way that the plastic material encapsulates the component (29, 30) at least to some extent, and wherein the plastic material, in a cured and/or cross-linked state, preferably has adhesive properties, and
d) Attachment (S4) of the insulation arrangement (15) for thermal and/or acoustic insulation of the functional compartment (2), in particular the dishwashing compartment, to the outer side of the functional compartment (2), in particular the dishwashing compartment, in such a way that the insulation element (18) for thermal and/or acoustic insulation of the functional compartment (2), in particular the dishwashing compartment, adheres to the functional element (2), in particular the dishwashing compartment, with a surface (19) directed towards the functional element (2), in particular the dishwashing compartment,
**characterised in that**
e) the insulation element (18) for thermal and/or acoustic insulation of the functional compartment (2), in particular the dishwashing compartment, adhering to the functional compartment (2), in particular the dishwashing compartment, can be separated from the functional compartment (2), in particular the dishwashing compartment, in a non-destructive manner by way of the surface (19) which is directed towards the functional component (2), in particular the dishwashing compartment.

9. Method according to claim 8, **characterised in that** in step c) the component (29, 30) is placed into a mould (31), which is filled with the plastic material, so that the component (29, 30) is encapsulated at least to some extent by the plastic material.

10. Method according to claim 8 or 9, **characterised in that** the insulation arrangement (15) for thermal and/or acoustic insulation of the functional compartment (2), in particular the dishwashing compartment, is produced in step c) in such a way and is attached in step d) to the outer side of the functional element (2), in particular the dishwashing compartment, in such a way that the insulation arrangement (15) for thermal and/or acoustic insulation of the functional compartment (2), in particular the dishwashing compartment, has a first insulation element (18) for thermal and/or acoustic insulation of the functional compartment (2), in particular the dishwashing compartment, which is made of the plastic material, and a second insulation element (21) for acoustic insulation of the functional compartment (2), in particular the dishwashing compartment, wherein the first insulation element (18) for thermal and/or acoustic insulation of the functional compartment (2), in particular the dishwashing compartment, is arranged between the functional element (2), in particular the dishwashing compartment, and the second insulation element (21) for acoustic insulation of the functional compartment (2), in particular the dishwashing compartment.

## Revendications

1. Appareil électroménager (1), en particulier lave-vaisselle électroménager, comprenant une cuve de fonction (2), en particulier une cuve de lavage, d'un agencement isolant (15) prévu à l'extérieur, sur la cuve de fonction (2), en particulier la cuve de lavage pour l'isolation thermique et/ou acoustique de la cuve de fonction (2), en particulier de la cuve de lavage, et comprenant un module (29, 30) situé à l'extérieur de la cuve de fonction (2), en particulier de la cuve de lavage, dans lequel l'agencement isolant (15) pour l'isolation thermique et/ou acoustique de la cuve de fonction (2), en particulier de la cuve de lavage, présente un élément isolant (18) pour l'isolation thermique et/ou acoustique de la cuve de fonction (2), en particulier de la cuve de lavage, dans lequel l'élément isolant (18) pour l'isolation thermique et/ou acoustique de la cuve de fonction (2), en particulier de la cuve de lavage, est fabriqué d'une pièce d'un matériau dans une matière synthétique, dans lequel le module (29, 30) est enrobé au moins partiellement par la matière synthétique, et dans lequel la matière synthétique présente, à l'état durci et/ou réticulé, des caractéristiques de préférence d'adhérence, de sorte que l'élément isolant (18) pour l'isolation thermique et/ou acoustique de la cuve de fonction (2), en particulier de la cuve de lavage, adhère à la cuve de fonction (2), en particulier à la cuve de lavage, avec une surface (19) regardant la cuve de fonction (2), en particulier la cuve de lavage
**caractérisé en ce que**
l'élément isolant (18) pour l'isolation thermique et/ou acoustique de la cuve de fonction (2), en particulier de la cuve de lavage, adhérant à la cuve de fonction (2), en particulier à la cuve de lavage, avec une surface (19) regardant la cuve de fonction (2), en particulier la cuve de lavage, soit séparable sans casse de la cuve de fonction (2), en particulier de la cuve de lavage.

2. Appareil électroménager (1) selon la revendication 1, **caractérisé en ce que** la matière synthétique est un polyuréthane, en particulier un polyuréthane moussé.

3. Appareil électroménager (1) selon la revendication 1 ou 2, **caractérisé en ce que** le module (29, 30) est un module à circulation d'eau, un module à circulation d'air, une poche d'eau, une pièce synthétique pour l'introduction d'une force dans la cuve de lavage, un ventilateur, un moteur, un ressort, un câble, un conducteur ou un composant électrique, un feutre, une natte, un module en matière synthétique, une mousse ou un bitume.

4. Appareil électroménager (1) selon la revendication 1, 2 ou 3, **caractérisé en ce que** la matière synthétique entoure complètement le module (29, 30).

5. Appareil électroménager (1) selon la revendication 1, 2 ou 3, **caractérisé en ce que** l'agencement isolant (15) pour l'isolation thermique et/ou acoustique de la cuve de fonction (2), en particulier de la cuve de lavage, présente un premier élément isolant (18) pour l'isolation thermique et/ou acoustique de la cuve de fonction (2), en particulier de la cuve de lavage, lequel est confectionné en matière synthétique, et un deuxième élément isolant (21) pour l'isolation acoustique de la cuve de fonction (2), en particulier de la cuve de lavage, dans lequel le premier élément isolant (18) pour l'isolation thermique et/ou acoustique de la cuve de fonction (2), en particulier de la cuve de lavage, se trouve entre la cuve de fonction (2), en particulier la cuve de lavage, et le deuxième élément isolant (21) pour l'isolation acoustique de la cuve de fonction (2), en particulier de la cuve de lavage.

6. Appareil électroménager (1) selon la revendication 5, **caractérisé en ce que** le module (29, 30) est en contact avec le deuxième élément isolant (21) pour l'isolation acoustique de la cuve de fonction (2), en particulier de la cuve de lavage.

7. Appareil électroménager (1) selon la revendication 5 ou 6, **caractérisé en ce que** la matière synthétique est plaquée par de la mousse contre le deuxième élément isolant (21) pour l'isolation acoustique de la cuve de fonction (2), en particulier de la cuve de lavage.

8. Procédé de fabrication d'un appareil électroménager (1), en particulier d'un lave-vaisselle électroménager, comprenant les étapes suivantes :
a) mise à disposition (S1) d'une cuve de fonction (2), en particulier d'une cuve de lavage,
b) mise à disposition (S2) d'un module (29, 30) situé à l'extérieur de la cuve de fonction (2), en particulier de la cuve de lavage,
c) fabrication (S3) d'un agencement isolant (15) pour l'isolation thermique et/ou acoustique de la cuve de fonction (2), en particulier de la cuve de lavage, dans lequel l'agencement isolant (15) pour l'isolation thermique et/ou acoustique de la cuve de fonction (2), en particulier de la cuve de lavage, présente un élément isolant (18) pour l'isolation thermique et/ou acoustique de la cuve de fonction (2), en particulier de la cuve de lavage, dans lequel l'élément isolant (18) pour l'isolation thermique et/ou acoustique de la cuve de fonction (2), en particulier de la cuve de lavage, est enrobé dans une matière synthétique, de façon que la matière synthétique enrobe le module (29, 30) au moins partiellement, et dans lequel la matière synthétique présente, à l'état durci et/ou réticulé, des caractéristiques de préférence d'adhérence, et
d) la pose (S4), côté extérieur, de l'agencement isolant (15) pour l'isolation thermique et/ou acoustique de la cuve de fonction (15), en particulier de la cuve de lavage, contre la cuve de fonction (2), en particulier la cuve de lavage, de façon que l'élément isolant (18) pour l'isolation thermique et/ou acoustique de la cuve de fonction (2), en particulier de la cuve de lavage, adhère à l'élément de fonction (2), en particulier à la cuve de lavage, avec une surface (19) regardant l'élément de fonction (2), en particulier la cuve de lavage **caractérisé en ce que**
e) l'élément isolant (18) pour l'isolation thermique et/ou acoustique de la cuve de fonction (2), en particulier de la cuve de lavage, adhérant à la cuve de fonction (2), en particulier à la cuve de lavage, avec une surface (19) regardant la cuve de fonction (2), en particulier la cuve de lavage, est séparable sans casse de la cuve de fonction (2), en particulier de la cuve de lavage.

9. Procédé selon la revendication 8, **caractérisé en ce que** à l'étape c), le module (29, 30) est inséré dans un moule (31), qu'on remplit de la matière synthétique, de sorte que le module (29, 30) est enrobé au moins partiellement par la matière synthétique.

10. Procédé selon la revendication 8 ou 9, **caractérisé en ce que** l'agencement isolant (15) pour l'isolation thermique et/ou acoustique de la cuve de fonction (2), en particulier de la cuve de lavage, est confectionné à l'étape c) et est appliqué à l'étape d) extérieurement contre l'élément de fonction (2), en particulier la cuve de lavage, de sorte que l'agencement isolant (15) pour l'isolation thermique et/ou acoustique de la cuve de fonction (2), en particulier de la cuve de lavage, présente un premier élément isolant (18) pour l'isolation thermique et/ou acoustique de la cuve de fonction (2), en particulier de la cuve de lavage, lequel est confectionné en la matière synthétique et un deuxième élément isolant (21) pour l'isolation acoustique de la cuve de fonction (2), en particulier de la cuve de lavage, dans lequel le premier élément isolant (18) pour l'isolation thermique et/ou acoustique de la cuve de fonction (2), en particulier de la cuve de lavage, est disposé entre l'élément de fonction (2), en particulier la cuve de lavage, et le deuxième élément isolant (21) pour l'isolation acoustique de la cuve de fonction (2), en particulier de la cuve de lavage.
